## Europäisches Patentamt

## European Patent Office

## Office européen des brevets

(11) Publication number: **0 138 120**
**A2**

(12) **EUROPEAN PATENT APPLICATION**

(21) Application number: **84111581.9**

(22) Date of filing: **27.09.84**

(51) Int. Cl.⁴: **B 64 D 37/06**

(30) Priority: **30.09.83 US 537697**

(43) Date of publication of application: **24.04.85**
**Bulletin 85/17**

(84) Designated Contracting States: **AT BE CH DE FR GB IT LI LU NL SE**

(71) Applicant: **The Boeing Company, P.O. Box 3999, Seattle Washington 98124 (US)**

(72) Inventor: **Jones, Robert Eugene, 19612 S.E. 127th Street, Issaquah Washington 98027 (US)**
Inventor: **Musgrove, Max Donnell, P.O. Box 1254, Mercer Island Washington (US)**

(74) Representative: **Madgwick, Paul Roland et al, Ladas & Parry Isartorplatz 5, D-8000 München 2 (DE)**

(54) **A truss supporting structure for a toroidal tank.**

㊷ A toroidal tank truss supporting structure for a toroidal tank having a torus portion, with a hollow interior, and a torus shell enclosing the hollow interior is provided. The internal support structure includes a plurality of ring-bulkheads attached to the torus shell to divide the hollow interior into compartments. A first number of stringers are each connected to or integral with the torus shell. A second number of slosh baffles are each attached to two adjacent ring-bulkheads and to two of the first number of stringers.

-1-

# A TRUSS SUPPORTING STRUCTURE FOR A
## TOROIDAL TANK

### BACKGROUND OF THE INVENTION

The present invention relates to a truss supporting structure for a fluid container and, more particularly, to a truss supporting structure for a toroidal tank that is capable of containing a fluid.

Due to space limitations, it is often desirable to use a toroidal tank construction to hold fluids, such as fuel or propellants, in various types of flight vehicles, such as aircraft and spacecraft. A toroidal tank construction often allows for the maximum utilization of a flight vehicle's interior space. The shape of the toroidal tank usually permits it to fit within the narrow or limited confines of a flight vehicle's fuselage or fuel compartment.

Unfortunately, the use of toroidal tanks, particularly of a relatively large size, in a flight vehicle has been restricted due to numerous problems with toroidal tank design and analysis. For example, in a monocoque toroidal tank configuration, the support provisions on the tank walls, which are to support the tank against gravity and inertial loads, cause local stress concentrations that necessitate an increased thickness in the tank shell and, correspondingly, an increase in tank weight. Some of these support provisions cause localized buckling by inducing net compressive stresses in the tank walls.

To avoid this problem of buckling, some toroidal tanks increase the internal operating pressure or provide localized stiffening. However, these changes

-2-

result in weight and cost increases. In addition, conventional toroidal tanks experience much larger stress levels due to internal pressure than, for example, cylindrical tanks of comparable cross-section. Thus, the toroidal tank must have increased skin thickness to handle fluid pressure.

Moreover, the natural frequencies tend to be low and the internal stresses and deflections of the conventional tank can be highly nonlinear and, consequently, they result in variations in dynamic response rates as a function of load and deflection amplitude. These characteristics can seriously impair both accurate dynamic analysis and dynamic response. This along with the low natural frequency will limit the usefulness of the toroidal tank in systems in which the dynamics of the toroidal tank are critical to the dynamic response of the system. Similarly, excessive deflections in the conventional toroidal tank can seriously restrict its usefulness in volume constrained applications.

Frequently, the toroidal tank used in flight vehicles requires various types of slosh baffles to limit or restrict the sloshing of fluid within the tank. The installment of a separate baffling system within the toroidal tank increases the weight, complexity, and cost of the tank.

The toroidal tank may fail due to a combination of stress corrosion, fatigue and buckling. A localized failure in this type of structure can rapidly propagate and precipitate total system failure. The conventional toroidal tank is usually difficult to handle, test, or attach in position due to its fragility.

-3-

Another problem of large conventional toroidal tanks is that they typically display natural frequencies which are much lower than those of more conventional propellant tank structures. When used in space or launch vehicles those natural frequencies tend to be in the same range as the control system frequencies. When this occurs dynamic coupling between the tank support system and the vehicle control system becomes unstable and unable to control the vehicle flight path.

A second problem associated with the low natural frequency of the tank support structure is pogo. Pogo results from coupling between the tank support frequencies and the engine firing characteristics resulting in significant variations in engine thrust, which will significantly decrease the vehicle performance efficiency, and can even result in destruction of the vehicle. Occurrence of either problem can be equally effective in preventing the vehicle from accomplishing its intended mission. To analytically verify freedom from these problems, it is essential that the propellant tank structure be both quite stiff and amenable to linear analysis.

Previous attempts have been made to solve these problems associated with the use of conventional toroidal tanks, especially in a flight vehicle. For example, the operating pressure within the toroidal tank has been increased to prevent the buckling of the tank. This increased pressure, however, does not eliminate the nonlinear response of the tank to stresses and deflections, and can create hazards in buckling and transportation operations. Another

0138120

-4-

proposed solution has increased the shell thickness or local shell bending stiffness to reduce stress and prevent tank buckling. These changes can seldom be carried far enough to eliminate local stress problems at the support points, and they add weight to the tank. Another proposed solution has installed circular rings at the support points to retain the circular shape of the tank; to distribute support loads to the tank shell; and to limit the sloshing of the fluid within the tank. This proposed solution, however, adds cost and weight to the tank without eliminating the nonlinear response of the tank to stresses and deflections between the rings, and it also fails to control fluid motions, which are circumferential with respect to the torus cross-sections.

The present invention obviates these inherent problems and disadvantages associated with various toroidal tank constructions by providing a truss supporting structure for a toroidal tank, especially one used in a flight vehicle, that significantly reduces tank stresses; limits tank shell buckling; reduces the nonlinear response of the tank to stress and deflections; and limits the sloshing of the fluid within the tank. The present invention solves these problems without significantly increasing the weight of the tank.

-5-

## SUMMARY OF THE INVENTION

The present invention provides a method of forming a toroidal tank having a truss supporting structure. The method comprises the steps of fabricating the truss supporting structures by first joining a plurality of ring-bulkheads to several stringers to establish a firm framework corresponding to the desired size and shape of the tank. One or more slosh baffles are attached to the ring-buckheads and the stringers. A tank skin is fit over the framework to form a torus shell of the toroidal tank.

The present invention also provides a toroidal tank truss supporting structure comprising a toroidal tank having a torus portion capable of containing a fluid or a gas. The torus portion has a hollow interior and a torus shell enclosing the hollow interior. A plurality of ring-bulkheads are attached to the torus shell to divide the hollow interior into compartments. A first number of stringers are each connected to or integral with the torus shell. A second number of slosh baffles are each attached to two adjacent ring-bulkheads and to two of the first number of stringers.

The present invention enhances the usefulness of toroidal tank structures, since it provides for concentrated support forces and also limits system deflections and the nonlinear behavior of tanks to levels that can be rationally neglected in static and dynamic strength and deflection behavior analysis. The present invention increases the tank strength and its natural frequencies. The truss supporting structure will limit the extent of buckling, and prevent buckling

-6-

from significantly affecting the integrity of the system. Additionally, the proper selection and detailing of the toroidal tank truss supporting structure will also simultaneously provide a slosh baffling and a crack tear stopper. The use of the toroidal tank truss supporting structure also eliminates the need to use various support tools in assembling the tank, since the truss supporting structure provides the requisite framework.

In short, the truss supporting structures of the present invention avoids the numerous problems associated with previous toroidal tank constructions, and provides a toroidal tank that is more durable and easier to handle during fabrication, testing, and shipping due to this durability. The location and sizing of specific internal support members for each different toroidal tank design application are selected and tailored by the structural engineer to best satisfy the requirements of the specific application.

BRIEF DESCRIPTION OF THE DRAWINGS

The accompanying drawings, which are incorporated in and constitute a part of the specification, illustrate one embodiment of the invention and, together with the description, serve to explain the principles of the invention.

Figure 1 is a plan cross section of a toroidal tank showing one embodiment of the internal support structure of the present invention.

Figure 2 is a partial cross-sectional view of the support structure taken along line A-A of Figure 1.

-7-

Figure 3 is a front view of a ring-bulkhead and attached slosh baffles used in the present invention.

Figure 4 is a side view of a section of stringers and attached slosh baffles used in the present invention taken along line B-B of Figure 1.

Figure 5 is a cross-sectional view of an alternative embodiment of the present invention.

## DESCRIPTION OF THE PREFERRED EMBODIMENT

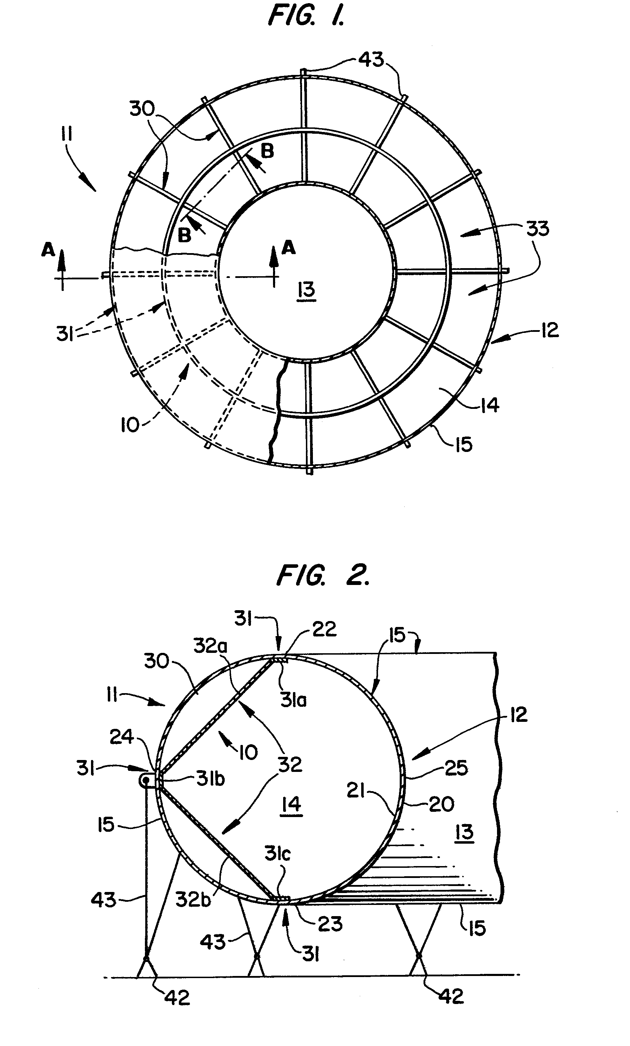

Reference is now made in detail to the present preferred embodiment, an example of which is illustrated in the attached figures. Referring now to Figures 1 and 2, a toroidal tank truss supporting structure 10 for a toroidal tank 11 is shown. The toroidal tank 11 includes a torus portion 12 and a central opening 13. The torus portion 12 has a hollow interior 14 and a torus shell 15 enclosing the hollow interior 14. The torus shell 15 has an exterior surface 20 and an interior surface 21. The interior side 21 of the torus shell 15 includes a top portion 22, a bottom portion 23, an outer portion 24, and an inner portion 25. It should be understood that the references to the top, bottom, outer, and inner portions of the tank are arbitrary designations with respect to the drawings and, in use, the tank may be turned in a number of directions so as to change the relative spatial designations of the tank. Hence, during use, the top portion 22 may actually be the bottom of the tank 11.

The toroidal tank 11 is usually of the kind used in flight vehicles, such as aircraft and spacecraft, to contain a fluid or a gas, such as a fuel or propellant.

-8-

However, the toroidal tank can also be of the kind used on the ground to contain various fluids or gases such as cryogenic substances. Preferably, the torus portion 12 of the toroidal tank 11 has a cross section, as shown in Figure 2, which is substantially circular in shape. However, other cross-sectional shapes, such as an ellipse, are acceptable within the scope of the invention.

The truss supporting structure 10 includes a plurality of ring-bulkheads 30, a first number of stringers 31, and a second number of slosh baffles 32. The ring-bulkheads 30 can either coincide in shape with the cross-sectional configuration of the torus portion 12, or they can provide a shape composed of several circular or elliptical arcs that connect to create a complete toroidal cross-section. For example, if the cross-section of the torus portion 12 is a circle, then the ring-bulkheads 30 may be circular in shape to allow the ring-bulkheads 30 to be attached to the torus shell 15.

Alternatively, the ring-bulkheads 30 need not be circular in shape as regards to the toroidal tank cross-section. Instead, the ring-bulkheads 30, as noted, may provide a shape having several circular or elliptical arcs which connect to form a complete toroidal cross-section. This latter option has been found to reduce the stresses in the torus shell containment structure by a substantial amount. Similarly, if the cross-section of the torus portion 12 is elliptical, then the ring-bulkhead 30 may be elliptical in shape, or they may provide a shape having several circular or elliptical arcs.

-9-

In one embodiment, the ring-bulkheads 30 are located along a major portion of the hollow interior 14 of the torus portion 12 to divide the hollow interior 14 into a plurality of fuel compartments 33. As illustrated in Figures 1 and 2, the ring-bulkheads 30 are substantially vertically positioned in the hollow interior 14 of the torus portion 12. They are spaced apart at a sufficient distance to provide proper support to the torus shell 15 and to form the desired size of compartments 33. The number of ring-bulkheads 30, used in forming a particular toroidal tank truss supporting structure, is governed by various design and construction considerations, such as the size, strength, and use of the toroidal tank 11.

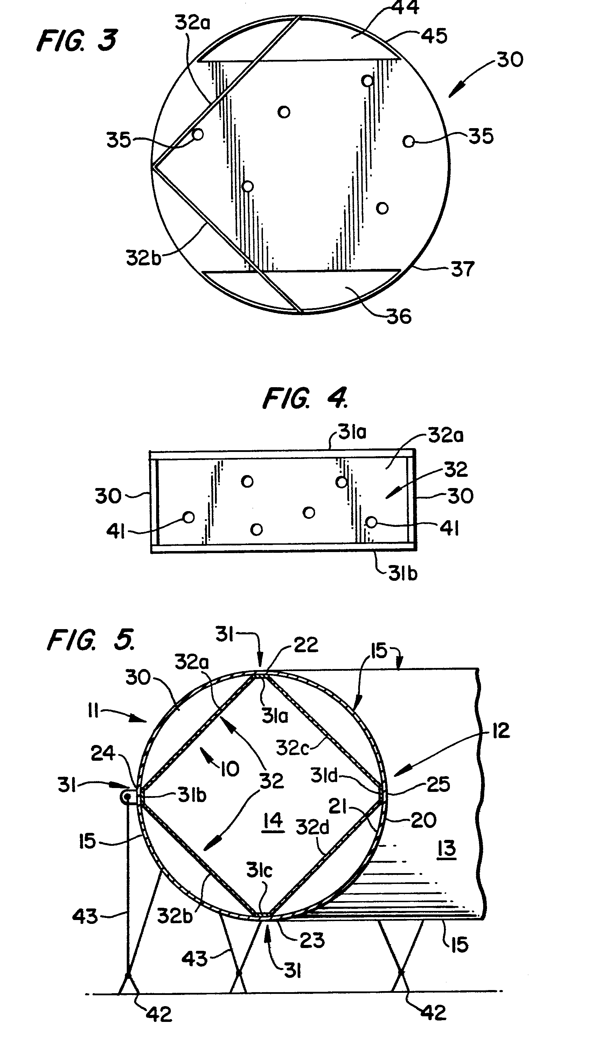

As shown in Figure 3, each ring-bulkhead 30 contains several holes 35 to allow for the passage of fluid, gas or air, contained in the torus portion 12, through the bulkhead 30. Likewise, each ring-bulkhead 30 has an opening 36 along its bottom 37 to allow all of the fluid to be drained from the hollow interior 14 of the torus portion 12. Additionally, each ring-bulkhead 30 has an opening 44 along its top 45 to permit gas or air to escape from the individual compartments 33, and to permit the filling of the tank hollow interior 14. If such openings 36 and 44 are not located on each ring-bulkhead 30, it would be difficult to fill, drain or use all of the capacity of the hollow interior 14, since the ring-bulkheads 30 would seal the fluid or gas off from the fill and drain holes (not shown) located in the torus shell 15. The fill and drain holes allow for the passage of fluid or gas out of the hollow interior 14 of the torus portion 12.

-10-

A first number of stringers 31 are each connected to or integral with the torus shell 15. The stringers 31, as shown in Figure 1, form a framework for the torus shell 15. The stringers 31 create hard points in the truss supporting structure 10, upon which the torus shell 15 can be secured. Preferably, the stringers 31 are especially useful in supporting a torus shell 15 that is made from a relatively thin or weak material. Accordingly, the use of the stringers 31 in the torus supporting structure 10 allow for a wide range of torus shell materials to be used, which are capable of being tailored to the particular environment of the toroidal tank 11.

The ring-bulkheads 30 and stringers 31 form a portion of the truss supporting structure 10 that facilitates attachment of the slosh baffles 32, in the hollow interior 14 of the torus portion 12, to baffle against all forms of fluid motion, while also providing stiffness and strength to the tank support points. To achieve slosh baffling, the slosh baffles 32 are attached to the ring-bulkheads 30 and the stringers 31, thereby creating a tank internal baffle geometry appropriate to the application at hand. The ring-bulkheads 30 and the stringers 31 provide a very versatile attachment structure for the slosh baffles 32, which either partially or completely cross the tank 11 interior.

As shown in Figure 2, in one embodiment, the stringers 31 may include a top stringer 31a, an outer stringer 31b, a bottom stringer 31c, and an inner stringer 31d. The top stringer 31a is connected to or intergral with the top portion 22 of the interior

-11-

surface 21 of the torus shell 15. In a similar manner, the outer stringer 31b is connected to or integral with the outer portion 24 of the interior surface 21 of the torus shell 15. Likewise, the bottom stringer 31c is connected to or integral with the bottom portion 23 of the interior surface 21 of the torus shell 15, and the inner stringer 31d is connected to or integral with the inner portion 25 of the interior surface 21 of the torus shell 15. The first number of stringers 31 may be positioned at equal angles on the interior surface of the shell. For example, the top stringer 31a, the outer stringer 31b, the bottom stringer 31c, and the inner stringer 31d, as shown in Figures 2, may be positioned about 90° apart on the interior surface 21 of the tank shell 15. However, various other placements or positionings of the stringers 31 are permitted within the scope of the invention depending upon various design and use considerations.

The truss supporting structure 10 is not limited to the configuration of stringers 31 shown in Figure 2. Rather, any number of stringers 31 and various positionings of the stringers 31 around the torus shell 15 may be used to provide the desired framework for the toroidal tank. For example, in one embodiment, only a number of top stringer 31a and a number of outer stringer 31b may be used in forming the tank framework.

As illustrated in Figures 2 and 4, each slosh baffle 32 is attached to two adjacent ring-bulkheads 30 in the hollow interior 14 of the torus portion 12, and to two of the stringers 31. The second number of slosh baffles 32 is divided into slosh baffle pairs, which include a top baffle 32a and a bottom baffle 32b. The

-12-

top baffle 32a is attached to two adjacent ring-bulkheads 31 and to the top stringer 31a and the outer stringer 31b. Similarly, the bottom baffle 32b is attached to two adjacent ring-bulkheads 31 and to the outer stringer 31b and the bottom stringer 31c. Such a configuration of the slosh baffles 32a and 32b provides strength to the truss supporting structure 10.

Various other configurations, placements, or positionings of the slosh baffles 32, however, are also permissible within the scope of the invention depending upon various design and use considerations. For example, as shown in Figure 5, the inner stringer 31d is connected to the inner portion 25 of the torus shell 15, and one of the slosh baffles 32c is attached to the top stringer 31a and the inner stringer 31d. Another slosh baffle 32d is also attached to the inner stronger 31d and the bottom stringer 31c.

A plurality of holes 41, as illustrated in Figure 4, are provided in each slosh baffle 32 to allow for the passage of fluid through the slosh baffle 32. In addition to providing strength to the truss supporting structure 10, the slosh baffles 32 also act to baffle or dampen the movement of the fluid in the hollow interior 14 of the torus portion 12. The holes 41 in the slosh baffles 32 are similar to the holes 35 in the ring-bulkheads 30 and, accordingly, perform the same function of permitting the filling, venting, and draining of the tank. Preferably, the slosh baffles 32 are constructed to be shear webs.

When the toroidal tank 11 is used in a flight vehicle, such as an aircraft or a spacecraft, the toroidal tank 11 is usually positioned within the

-13-

fuselage 42 of the flight vehicle. Various support means can be used to maintain the toroidal tank 11 in a relatively stationary position in the fuselage 42. As herein embodied, as shown in Figure 2, the support means include a plurality of support struts 43, which extend between the exterior side 20 of the tank shell 15 and the fuselage 42. Depending upon design and use considerations, the struts 43 can suspend the toroidal tank 11 from the ceiling of the fuselage 42; hold the toroidal tank 11 above the floor of the fuselage 42; or support the toroidal tank in other positions.

Alternatively, the support struts 43 can be replaced by a cylindrical or conical shell structure. Furthermore, a payload, an engine, or other equipment may also be supported in turn from the toroidal tank 11 by the use of a second similar set of attachment struts, or cylindrical or conical shell structures.

The truss supporting structure 10 can also be fabricated independently of the torus shell 15, as shown in Figures 1 and 2, so that the truss supporting structure 10 need not provide fluid containment. In such a fabrication, the torus portion 12 of the toroidal tank 11 provides fluid containment by holding the fluid within the hollow interior 14 of the torus portion 12. Alternatively, the truss supporting structure 10 can be fabricated integral with the torus shell 15 so that portions of the truss supporting structure 10 also provide fluid containment.

The ring-bulkheads 30, the stringers 31, and the slosh baffles 32 of the truss supporting structure 10 can be constructed from plates, beams, girders, and truss members commonly known in the art. The

-14-

dimensions, material, number, and placement of the ring-bulkheads 3, stringers 31, and slosh baffles 32, within the scope of this invention, will depend upon the design and ultimate use of the particular toroidal tank 11, in which the truss supporting structure 10 is to be placed. For example, when liquid oxygen is to be contained within the tank 11, the truss supporting structure 10 and the tank 11 are typically made from aluminum. When other fluids or gases are within the tank 11, other metals, such as titanium, may be used.

The truss supporting structure 10 is initially formed by connecting the various stringers 31, slosh baffles 32, and ring-bulkheads 30. After forming this framework, the material or skin of the tank shell is fit around the formed inner structure 10. More particularly, the truss supporting structure 10 can be assembled by initially joining together a plurality of ring-bulkheads 30 and a first number of stringers 31 to establish a firm framework corresponding to the desired size and shape of the tank. The second number of slosh baffles 32 is then attached to the ring-bulkheads 30 and stringers 31, as described above. Finally, a tank skin is fit over the framework of ring-bulkheads 30, stringers 31, and slosh baffles 32 to form the torus shell 15 of the toroidal tank 11 having the torus supporting structure 10 of the present invention. The ring-bulkheads 30, stringers 31 and slosh baffles 32 can be joined together by welding or by other techniques in the art.

It will be apparent to those skilled in the art that various other modifications and variations could be made in the structure of the invention without parting from the scope of the appended claims.

CLAIMS                                      0138120

1.  A method of forming a toroidal tank having a truss supporting structure comprising the steps of:

(a)  joining a plurality of ring-bulkheads to several stringers to esablish a firm framework corresponding to the desired size and shape of the tank;

(b)  attaching one or more slosh baffles to the ring-bulkheads and stringers; and

(c)  fitting a tank skin over the framework to form a torus shell of the toroidal tank.

2.  A toroidal tank truss supporting structure comprising:

a toroidal tank having a torus portion capable of containing a fluid or a gas, the torus portion having a hollow interior and a torus shell enclosing the hollow interior;

a plurality of ring-bulkheads attached to the torus shell to divide the hollow interior into compartments;

a first number of stringers each connected to the torus shell; and

a second number of slosh baffles, each attached to two adjacent ring-bulkheads and to two of the first number of stringers.

3.  The toroidal tank truss supporting structure as in claim 2, wherein the first number of stringers include a top stringer connected to the top portion of the interior surface of the shell.

4.  The toroidal tank truss supporting structure as in claim 2 or 3, wherein the first number of stringers include an outer stringer connected to the outer portion of the interior surface of the shell.

5. The toroidal tank truss supporting structure as in claim 2, 3 or 4, wherein the first number of stringers include a bottom stringer connected to the bottom portion of the interior surface of the shell.

6. The toroidal tank interior support structure as in claim 2, 3, 4 or 5, wherein the first number of stringers include an inner stringer connected to the inner portion of the interior surface of the shell.

7. The toroidal tank truss supporting structure as in any one of the preceding claims, wherein the first number of stringers are equidistantly positioned on the torus shell.

8. The toroidal tank truss supporting structure as in any one of the preceding claims, wherein the second number of slosh baffles includes at least one slosh baffle attached to two of the first number of stringers.

9. The toroidal tank truss supporting structure as in any one of the preceding claims, wherein each ring-bulkhead has a plurality of holes to allow for the passage of fluid and gas through the ring-bulkhead.

10. The toroidal tank truss supporting structure as in any one of the preceding claims, wherein each slosh baffle has a plurality of holes to allow for the passage of fluid and gas through the slosh baffle.

11. A toroidal tank truss supporting structure comprising:

a toroidal tank having a torus portion capable of containing a fluid or gas, the torus portion having a hollow interior and a torus shell enclosing the hollow interior, the shell having interior and exterior surfaces, the interior surface having a top, a bottom, an outer and an inner portion;

-17-

a plurality of ring-bulkheads attached to the torus shell to divide the hollow interior into compartments;

a top stringer, a bottom stringer, and an outer stringer each connected respectively to the top, bottom, and outer portions of the interior surface of the shell; and

a plurality of slosh baffle pairs including a top slosh baffle and a bottom slosh baffle, each top slosh baffle being attached to two adjacent ring-bulkheads and to the top stringer and the outer stringer, each bottom slosh baffle being attached to two adjacent ring-bulkheads and to the outer stringer and the bottom stringer.

# FIG. 1.

# FIG. 2.

0138120

**FIG. 3**

32a  44  45  30  35  35  37  36  32b

**FIG. 4.**

31a  32a  32  30  30  41  41  31b

**FIG. 5.**

31  22  15  32a  30  31a  11  10  32c  12  24  31  32  31d  25  31b  21  20  14  32d  15  13  43  32b  31c  15  43  31  23  42  42